# FASCICULE DE BREVET EUROPEEN

(11) **EP 3 699 443 B1**
(45) Date de publication et mention de la délivrance du brevet: **15.09.2021**
(21) Numéro de dépôt: 20158950.4
(22) Date de dépôt: 24.02.2020
(51) Int. Cl.: F16C 3/02

(54) **ARBRE DE TRANSMISSION COMPORTANT UNE PLURALITE D'ENROULEMENTS HELICOIDAUX**
ÜBERTRAGUNGSWELLE, DIE EINE VIELZAHL VON SPIRALFÖRMIGEN WICKLUNGEN UMFASST
TRANSMISSION SHAFT COMPRISING A PLURALITY OF HELICAL WINDINGS

(30) Priorité: 25.02.2019 FR 1901892
(43) Date de publication de la demande: 26.08.2020
(73) Titulaire: Safran Transmission Systems, 92700 Colombes (FR)
(72) Inventeur: RANVE, Jérôme, 77550 MOISSY-CRAMAYEL (FR); GREGORIO, Victor José, 77550 MOISSY-CRAMAYEL (FR)
(74) Mandataire: Brevalex

(56) Documents cités:
- WO-A2-2007/100593
- DE-A1- 4 010 901
- DE-A1-102011 054 110
- FR-A- 324 123
- US-A- 2 821 092
- US-A- 5 868 627

## Description

### DOMAINE TECHNIQUE

L'invention concerne un arbre de transmission, notamment un arbre de transmission appartenant à une turbomachine d'aéronef.

### ÉTAT DE LA TECHNIQUE ANTÉRIEURE

Dans une turbomachine, l'énergie produite sert d'une part à générer de la propulsion, elle sert aussi à l'entrainement d'accessoires faisant partie de la turbomachine ou bien de l'aéronef équipé de la turbomachine.

Pour cela, un boitier d'entrainement d'accessoires, aussi désigné par l'acronyme anglais A.G.B. (pour Accessory Gear Box) est relié à l'un des arbres principaux de la turbomachine pour prélever une partie de la puissance produite.

Un système d'entrainement reliant l'AGB à l'arbre principal comporte un premier arbre de transmission accouplé à un pignon solidaire de l'arbre principal de la turbomachine, un système de renvoi d'angle et un deuxième arbre de transmission.

Chaque arbre de transmission est un élément tubulaire et il subit de nombreuses contraintes générées par sa vitesse de rotation importante et le couple à transmettre.

Une autre contrainte est la réduction de l'encombrement de l'arbre de transmission, en particulier son diamètre externe et la réduction de la masse de l'arbre de transmission.

Pour réduire la masse de l'arbre de transmission, il a été proposé de le réaliser sous la forme d'un arbre ajouré, comportant de nombreuses ouvertures réparties sur sa longueur et autour de l'axe principal de l'arbre.

De telles ouvertures ont ainsi une influence sur la fréquence propre de l'arbre et la concentration de contraintes dans l'arbre.

La fréquence propre de l'arbre est la fréquence à laquelle l'arbre est excité et pour laquelle l'amplitude des vibrations en flexion de l'arbre devient maximale.

Ainsi, en optimisant la conception de l'arbre, il est recherché d'avoir une fréquence propre importante, qui est éloignée d'une plage de fréquence correspondant à la plage de vitesse de rotation que l'arbre parcourt en fonctionnement.

D'une part, pour renforcer un arbre, il faut augmenter sa raideur qui est dépendante du diamètre de l'arbre.

D'autre part, bien qu'un diamètre important de l'arbre permette d'augmenter la raideur, cela nuit à l'exigence selon laquelle l'encombrement de l'arbre doit être réduit. Le document FR 324 123 A montre un exemple de construction d'arbre selon le préambule de la revendication 1, renforcé à sa périphérie par des enroulements hélicoïdaux.

L'invention a pour but de proposer un arbre de transmission ayant une conception permettant de renforcer les propriétés mécaniques de l'arbre tout en ayant un encombrement et un poids réduit.

### EXPOSÉ DE L'INVENTION

L'invention propose un arbre présentant un axe principal A et comportant une pluralité d'enroulements hélicoïdaux s'étendant autour de l'axe principal A, chaque enroulement hélicoïdal étant, en section transversale, délimité par un premier arc de cercle radialement interne centré sur l'axe principal A, un deuxième arc de de cercle radialement externe centré sur l'axe principal A et deux segments ont chaque segment relie une extrémité du premier arc de cercle à une extrémité du deuxième arc de cercle, les deux segment définissant entre-eux un angle A1.

De préférence, la valeur de l'angle A1 est inférieure à 90°.

De préférence, chaque enroulement hélicoïdal comprend une bande de section constante s'enroulant autour de, et à distance de l'axe principal A, dont l'inclinaison entre un plan transversal perpendiculaire à la bande et un plan perpendiculaire à l'axe principal A est comprise entre 30° et 60°.

De préférence, l'arbre comporte des premiers enroulements s'enroulant autour de l'axe principal dans un premier sens et qui sont répartis à équidistance les uns des autres autour de l'axe principal A, et comporte des deuxièmes enroulements s'enroulant autour de l'axe principal A dans un deuxième sens opposé au premier sens et qui sont répartis à équidistance les uns des autres autour de l'axe principal A.

De préférence, le nombre et la distance entre deux premiers enroulements sont égaux au nombre et à la distance entre deux deuxièmes enroulements, respectivement.

De préférence, le nombre et la distance entre deux premiers enroulements sont différents du nombre et à de la distance entre deux deuxièmes enroulements, respectivement.

De préférence, l'arbre comporte une peau annulaire centrée sur l'axe principal A, dont le rayon est égal à l'un ou l'autre du rayon R1 du premier arc de cercle ou du rayon R2 du deuxième arc de cercle et qui est solidaire des enroulements hélicoïdaux.

L'invention propose aussi un procédé de dimensionnement d'un arbre selon l'invention, qui comporte :
- une première étape consistant à fixer les rayons R1 et R2 délimitant radialement la section de chaque enroulement hélicoïdal
- une deuxième étape consistant à définir le volume total de l'arbre
- une troisième étape consistant à définir la valeur d'au moins une contrainte de conception de l'arbre parmi la fréquence propre de l'arbre et les contraintes internes maximales que l'arbre est destiné à subir
- une quatrième étape de calcul du nombre d'enroulement hélicoïdaux et de la valeur de l'angle A1 en fonction des valeurs définies dans les étapes 1 à 3 précédentes.

### BRÈVE DESCRIPTION DES DESSINS

[Fig. 1] est une représentation schématique en section axiale d'une turbomachine d'aéronef comportant au moins un arbre de transmission réalisé selon l'invention ;
[Fig. 2] est une représentation schématique en perspective d'un tronçon d'un arbre de transmission réalisé selon l'invention ;
[Fig. 3] est une représentation schématique d'un enroulement hélicoïdal formant l'arbre de transmission représenté à la figure 2 ;
[Fig. 4] est une section selon un plan radial de l'enroulement représenté à la figure 3 ;
[Fig. 5] est représentation schématique de deux arbres de transmission montrant, pour un même volume, l'influence du nombre d'enroulement sur l'ouverture de leur section ;
[Fig. 6] est un graphique montrant la variation de la contrainte interne à l'arbre et de la fréquence propre de l'arbre en fonction du nombre d'enroulements.

### DESCRIPTION DETAILLEE

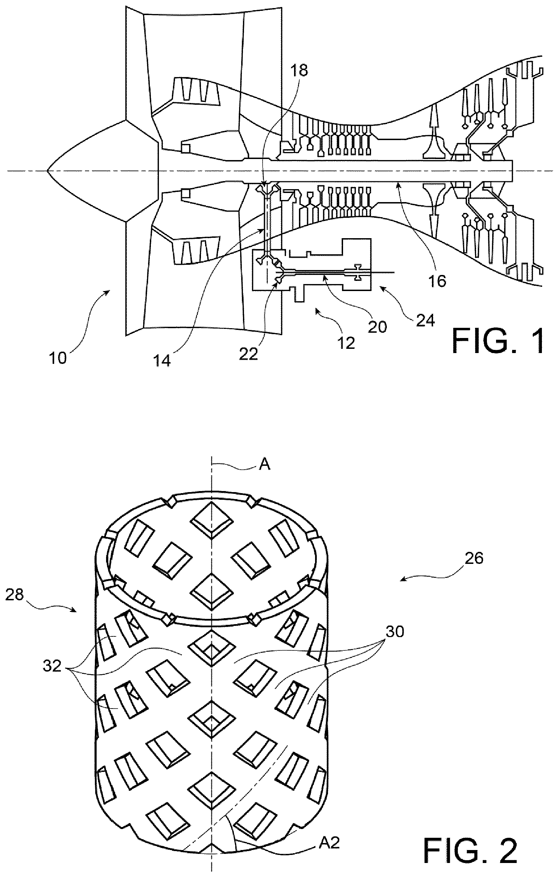

On a représenté à la figure 1 une turbomachine 10 comportant un système 12 pour l'entrainement d'accessoires de la turbomachine 10.

Le système 12 comporte un premier arbre de transmission 14 qui s'étend radialement par rapport à un axe principal de la turbomachine et qui est accouplé à un arbre haute pression 16 de la turbomachine par un accouplement à pignons coniques 18.

Le système 12 comporte un deuxième arbre de transmission 20 qui est orienté sensiblement parallèlement à l'axe principal de la turbomachine et qui est accouplé au premier arbre de transmission 14 par un renvoi d'angle 22, qui comprend un accouplement à pignons coniques.

Le deuxième arbre de transmission 20 est accouplé aux accessoires de la turbomachine 10 à entrainer, notamment par l'intermédiaire d'un boitier d'entrainement d'accessoires 24, aussi appelé AGB (pour Accessory Gear Box).

On a représenté à la figure 2 un arbre de transmission 26 qui peut être l'un et/ou l'autre du premier arbre de transmission 14 ou du deuxième arbre de transmission 20.

Dans la description qui va suivre, on décrira un seul arbre 26. Il sera compris que cette description s'applique indifféremment au premier arbre de transmission ou au deuxième arbre de transmission 20.

L'arbre de transmission 26 comporte au moins un tronçon 28 ayant une structure en treillis annulaire s'étendant autour d'un axe principal A de l'arbre de transmission 26.

Plus spécifiquement, l'arbre de transmission 26 comprend une pluralité d'enroulements hélicoïdaux 30, 32 qui s'enroulent autour de l'axe principal A dans un sens et dans l'autre en se croisant mutuellement.

L'arbre de transmission 26 comporte ainsi des premiers enroulements hélicoïdaux 30 qui s'enroulent autour de l'axe principal A dans un premier sens, qui est ici vers la droite en se reportant à la figure 2. Les premiers enroulements 30 sont décalés axialement et circonférentiellement les uns par rapport aux autres selon un même pas.

L'arbre de transmission 26 comporte aussi des deuxièmes enroulements hélicoïdaux 32 qui s'enroulent autour de l'axe principal A dans un deuxième sens, qui est ici vers la gauche en se reportant à la figure 2. Les deuxièmes enroulements 32 sont décalés axialement et circonférentiellement les uns par rapport aux autres selon un même pas.

Selon un mode de réalisation préféré, chaque enroulement hélicoïdal 30, 32 est incliné par rapport à un plan radial, c'est-à-dire par rapport à un plan perpendiculaire à l'axe principal A selon un angle A2 prédéfini qui est identique pour tous les enroulements 30, 32.

Ici, de préférence, la valeur de l'angle A2 est de 45 degrés.

Ainsi, mise à part leur inclinaison, les premiers enroulements hélicoïdaux 30 et les deuxièmes enroulements hélicoïdaux 32 sont identiques.

Chaque enroulement hélicoïdal 30, 32 comprend une bande de section constante qui est enroulée autour de l'axe principal A à distance de celui-ci, en formant une hélice. L'inclinaison de la bande par rapport à l'axe principal A, c'est-à-dire l'angle délimité par un plan radial perpendiculaire à l'axe principal A et un plan transversal perpendiculaire à la bande, en tout point, est comprise entre 30 et 60 degrés.

Chaque enroulement hélicoïdal 30, 32 présente une section 34, prise selon un plan transversal à cette bande, qui est délimitée radialement, par rapport à l'axe principal A par un premier arc de cercle 36 radialement interne, un deuxième arc de cercle 38 radialement externe, ces deux arcs de cercle étant centrés sur l'axe principal A.

La différence entre les rayons R1, R2 des arcs de cercle 36, 38 délimitant radialement la section 34 détermine l'épaisseur radiale E de l'arbre de transmission 26 par la formule E=R2-R1.

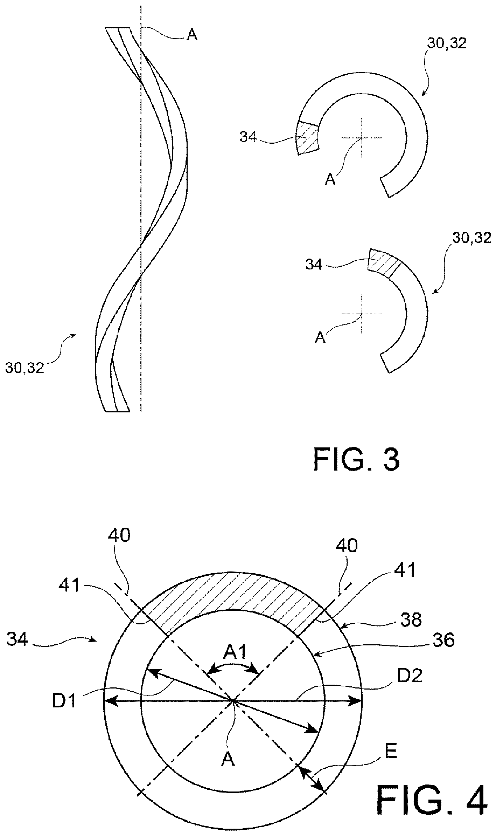

La section 34 est délimitée transversalement par deux segments 41 reliant les mêmes extrémités transversales de chaque arc de cercle 36, 38, c'est-à-dire un premier segment 41 situé à droite de la figure 4 relie l'extrémité de droite du premier arc de cercle 36 à l'extrémité de droite du deuxième arc de cercle 38 et un deuxième segment 41 situé à gauche de la figure 4 relie l'extrémité de gauche du premier arc de cercle 36 à l'extrémité de gauche du deuxième arc de cercle 38

Les deux droites 40, qui portent ces segments 41, délimitent un angle A1 d'ouverture de la section 34. De préférence, cet angle A1 est inférieur à 90°, afin notamment d'améliorer la flexibilité de l'arbre 26.

Selon une variante de réalisation de l'arbre 26, les enroulements 30, 32 ont pour fonction de rigidifier l'arbre 26, qui comporte ainsi une peau cylindrique pleine qui ne comporte aucune ouverture, et qui porte les enroulements 30, 32 sur sa face interne ou sa face externe.

Ainsi, le rayon de cette peau est égal à l'un ou l'autre du rayon R1 du cercle interne 36 et du rayon R2 du cercle externe 38.

L'amélioration du dimensionnement de l'arbre consiste à prédéfinir certaines dimensions de l'arbre 26, puis à calculer les autres dimensions de l'arbre à partir des dimensions prédéfinies.

Dans la description qui va suivre, on décrira les étapes successives d'un procédé pour dimensionner un arbre 26 constitué d'une pluralité de premiers enroulements hélicoïdaux 30 et de deuxièmes enroulements hélicoïdaux 32 qui vient d'être décrit précédemment.

De préférence, dans une première étape, les dimensions de l'arbre 26 qui sont prédéfinies sont le rayon externe R2 de l'arbre 26 et son épaisseur E (et par conséquent le rayon interne R1).

Ensuite, dans une deuxième étape, le volume total de l'arbre est défini. Cette deuxième étape permet de fixer la masse de l'arbre.

Ensuite, dans une troisième étape, le rapport entre le nombre d'enroulements 30, 32 est prédéfini. En effet, selon les contraintes que l'arbre 26 peut subir, le nombre de premiers enroulements 30 peut être égal ou différent du nombre de deuxièmes enroulements 32.

Ainsi, il faut définir la différence entre ces deux nombres avant de débuter le dimensionnement de l'arbre.

Si le nombre de premiers enroulements 30 est égal au nombre de deuxièmes enroulements 32, le pas entre deux premiers enroulements 30 adjacents est égal au pas entre deux deuxièmes enroulements 32 adjacents.

Ensuite, on définit des contraintes de conception de l'arbre qui doivent être respectées par le dimensionnement de l'arbre 26 et qui sont définies à partir des conditions de fonctionnement de l'arbre 26.

Ainsi, selon un mode de réalisation préféré, les contraintes de conception de l'arbre 26 sont la fréquence propre maximale de l'arbre et la valeur maximale des contraintes internes dans l'arbre 26.

Selon une dernière étape, le nombre d'enroulements 30, 32 et la valeur de l'angle A1 d'ouverture du secteur d'anneau sont calculés à partir des dimensions et des contraintes de conception qui ont été prédéfinies selon les étapes antérieures.

A l'issue de cette dernière étape, on obtient une relation entre le nombre d'enroulements 30, 32 et la valeur de l'angle A1 d'ouverture du secteur d'anneau.

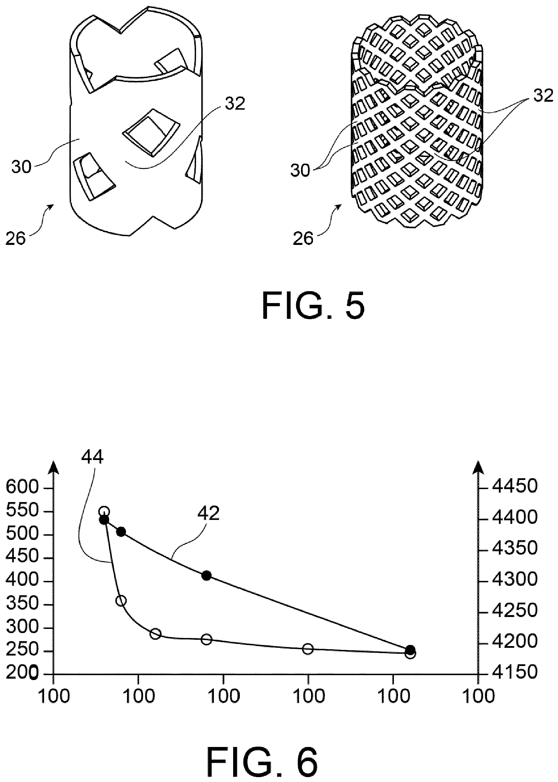

Comme on peut le voir à la figure 5, le choix d'un faible nombre d'enroulements 30, 32 implique une valeur faible de l'angle A1 et inversement, le choix d'un nombre important d'enroulements 30, 32 implique une valeur élevée de l'angle A1

Par la suite, le nombre d'enroulements 30, 32 ou la valeur de l'ange A1 est choisi, l'autre valeur sera déduite par cette relation.

Le choix est effectué selon la contrainte de conception de l'arbre 26 que l'on souhaite privilégier, tout en restant dans les limites imposées précédemment.

L'écartement entre les enroulements 30, 32 est dépendant du nombre d'enroulements 30, 32 et de la valeur de l'ange A1. Par conséquent, ce nombre d'enroulement a aussi une influence sur la valeur de l'arête délimitée par deux enroulements 30, 32 se croisant.

On a représenté à la figure 6 un graphique dans lequel une première courbe 42 représente la valeur de la fréquence propre maximale de l'arbre 26 et une deuxième courbe 44 représente la valeur maximale des contraintes internes dans l'arbre 26 en fonction du nombre d'enroulements 30, 32, pour un même encombrement et un même volume (R1, R2 fixés).

Comme on peut le constater, un faible nombre d'enroulements 30, 32 implique une fréquence propre de l'arbre 26 élevée, mais aussi des contraintes internes élevées.

Par contre, un nombre important d'enroulements 30, 32 implique une fréquence propre de l'arbre 26 faible, mais aussi des contraintes internes faibles.

## Revendications

1. Arbre (26) présentant un axe principal A et comportant une pluralité d'enroulements hélicoïdaux (30) s'étendant autour de l'axe principal A,
**caractérisé en ce que** chaque enroulement hélicoïdal (30, 32) est, en section transversale, délimité par un premier arc de cercle (36) radialement interne centré sur l'axe principal A, un deuxième arc de de cercle (38) radialement externe centré sur l'axe principal A et deux segments (41) dont chaque segment (41) relie une extrémité du premier arc de cercle (36) à une extrémité du deuxième arc de cercle (38), les deux segments 41 définissant entre-eux un angle A1.

2. Arbre (26) selon la revendication précédente, **caractérisé en ce que** la valeur de l'angle A1 est inférieure à 90°.

3. Arbre (26) selon l'une quelconque des revendications précédentes, **caractérisé en ce que** chaque enroulement hélicoïdal (30, 32) comprend une bande de section constante s'enroulant autour de, et à distance de l'axe principal A, dont l'inclinaison entre un plan transversal perpendiculaire à la bande et un plan perpendiculaire à l'axe principal A est comprise entre 30° et 60°.

4. Arbre (26) selon l'une quelconque des revendications précédentes, **caractérisé en ce qu'**il comporte des premiers enroulements (30) s'enroulant autour de l'axe principal dans un premier sens et qui sont répartis à équidistance les uns des autres autour de l'axe principal A,
et comporte des deuxièmes enroulements (32) s'enroulant autour de l'axe principal A dans un deuxième sens opposé au premier sens et qui sont répartis à équidistance les uns des autres autour de l'axe principal A.

5. Arbre (26) selon la revendication 4, **caractérisé en ce que** le nombre et la distance entre deux premiers enroulements (30) sont égaux au nombre et à la distance entre deux deuxièmes enroulements (32), respectivement.

6. Arbre (26) selon la revendication 4, **caractérisé en ce que** le nombre et la distance entre deux premiers enroulements (30) sont différents du nombre et à de la distance entre deux deuxièmes enroulements (32), respectivement.

7. Arbre (26) selon l'une quelconque des revendications précédentes, **caractérisé en ce que** il comporte une peau annulaire centrée sur l'axe principal A, dont le rayon est égal à l'un ou l'autre du rayon R1 du premier arc de cercle (36) ou du rayon R2 du deuxième arc de cercle (38) et qui est solidaire des enroulements hélicoïdaux (30, 32).

8. Procédé de dimensionnement d'un arbre (26) selon l'une quelconque des revendications précédentes, qui comporte :
- une première étape consistant à fixer les rayons R1 et R2 délimitant radialement la section (34) de chaque enroulement hélicoïdal (30)
- une deuxième étape consistant à définir le volume total de l'arbre (26)
- une troisième étape consistant à définir la valeur d'au moins une contrainte de conception de l'arbre (26) parmi la fréquence propre de l'arbre (26) et les contraintes internes maximales que l'arbre (26) est destiné à subir
- une quatrième étape de calcul du nombre d'enroulement hélicoïdaux (30, 32) et de la valeur de l'angle A1 en fonction des valeurs définies dans les étapes 1 à 3 précédentes.

## Patentansprüche

1. Welle (26), die eine Hauptachse A aufweist und eine Vielzahl von sich um die Hauptachse A erstreckenden, spiralförmigen Wicklungen (30) umfasst,
**dadurch gekennzeichnet, dass** jede spiralförmige Wicklung (30, 32) im Querschnitt durch einen ersten, radial inneren, auf der Hauptachse A zentrierten Kreisbogen (36), einen zweiten, radial äußeren, auf der Hauptachse A zentrierten Kreisbogen (38) und zwei Segmente (41) begrenzt ist, wobei jedes Segment (41) einen Endabschnitt des ersten Kreisbogens (36) mit einem Endabschnitt des zweiten Kreisbogens (38) verbindet, wobei die beiden Segmente 41 einen Winkel A1 zwischen sich definieren.

2. Welle (26) nach dem vorhergehenden Anspruch, **dadurch gekennzeichnet, dass** der Wert des Winkels A1 kleiner als 90° ist.

3. Welle (26) nach einem der vorhergehenden Ansprüche, **dadurch gekennzeichnet, dass** jede spiralförmige Wicklung (30, 32) einen Streifen mit gleichbleibendem Querschnitt umfasst, der um die und in einem Abstand von der Hauptachse A gewickelt ist, wobei die Neigung zwischen einer Querebene senkrecht zu dem Streifen und einer Ebene senkrecht zur Hauptachse A zwischen 30° und 60° beträgt.

4. Welle (26) nach einem der vorhergehenden Ansprüche, **dadurch gekennzeichnet, dass** sie erste Wicklungen (30) aufweist, die in einer ersten Richtung um die Hauptachse gewickelt sind und die gleichmäßig voneinander beabstandet um die Hauptachse A verteilt sind,
und zweite Wicklungen (32) aufweist, die in einer zweiten Richtung entgegengesetzt zur ersten Richtung um die Hauptachse A gewickelt sind und die gleichmäßig voneinander beabstandet um die Hauptachse A verteilt sind.

5. Welle (26) nach Anspruch 4, **dadurch gekennzeichnet, dass** die Anzahl und der Abstand zwischen zwei ersten Wicklungen (30) jeweils gleich der Anzahl und dem Abstand zwischen zwei zweiten Wicklungen (32) sind.

6. Welle (26) nach Anspruch 4, **dadurch gekennzeichnet, dass** sich die Anzahl und der Abstand zwischen zwei ersten Wicklungen (30) jeweils von der Anzahl und dem Abstand zwischen zwei zweiten Wicklungen (32) unterscheiden.

7. Welle (26) nach einem der vorhergehenden Ansprüche, **dadurch gekennzeichnet, dass** sie eine auf der Hauptachse A zentrierte, ringförmige Umhüllung aufweist, deren Radius gleich dem einen oder dem anderen des Radius R1 des ersten Kreisbogens (36) oder des Radius R2 des zweiten Kreisbogens (38) ist, und die mit den spiralförmigen Wicklungen (30, 32) fest verbunden ist.

8. Verfahren zur Dimensionierung einer Welle (26) nach einem der vorhergehenden Ansprüche, mit:
- einem ersten Schritt des Festlegens der Radii R1 und R2, die den Querschnitt (34) jeder spiralförmigen Wicklung (30) radial begrenzen
- einem zweiten Schritt des Definierens des Gesamtvolumens der Welle (26)
- einem dritten Schritt des Definierens des Wertes von mindestens einer Konstruktionsbeschränkung der Welle (26) aus der Eigenfrequenz der Welle (26) und den maximalen Eigenspannungen, welchen die Welle (26) ausgesetzt sein soll
- einem vierten Schritt der Berechnung der Anzahl an spiralförmigen Wicklungen (30, 32) und des Wertes des Winkels A1 in Abhängigkeit der in den vorhergehenden Schritten 1 bis 3 definierten Werte.

## Claims

1. A shaft (26) having a main axis A and including a plurality of helical windings (30) extending about the main axis A,
**characterised in that** each helical winding (30, 32) is, in cross section, delimited by a first radially inner circular arc (36) centered on the main axis A, a second radially outer circular arc (38) centered on the main axis A and two segments (41), each segment (41) of which connects one end of the first circular arc (36) to one end of the second circular arc (38), the two segments 41 defining therebetween an angle A1.

2. The shaft (26) according to the preceding claim, **characterised in that** the value of the angle A1 is less than 90°.

3. The shaft (26) according to any one of the preceding claims, **characterised in that** each helical winding (30, 32) comprises a constant section strip being wound about and at a distance from the main axis A, whose inclination between a transverse plane perpendicular to the strip and a plane perpendicular to the main axis A is comprised between 30° and 60°.

4. The shaft (26) according to any one of the preceding claims, **characterised in that** it includes first windings (30) being wound about the main axis in a first direction and which are distributed equidistant from each other about the main axis A,
and includes second windings (32) being wound about the main axis A in a second direction opposite to the first direction and which are distributed equidistant from each other about the main axis A.

5. The shaft (26) according to claim 4, **characterised in that** the number and the distance between two first windings (30) are equal to the number and to the distance between two second windings (32), respectively.

6. The shaft (26) according to claim 4, **characterised in that** the number and the distance between two first windings (30) are different from the number and the distance between two second windings (32), respectively.

7. The shaft (26) according to any one of the preceding claims, **characterised in that** it includes an annular skin centered on the main axis A, the radius of which is equal to one or the other of the radius R1 of the first circular arc (36) or of the radius R2 of the second circular arc (38) and which is secured to the helical windings (30, 32).

8. A method for dimensioning a shaft (26) according to any one of the preceding claims, which includes:
- a first step consisting in setting the radii R1 and R2 radially delimiting the section (34) of each helical winding (30)
- a second step consisting in defining the total volume of the shaft (26)
- a third step consisting in defining the value of at least one design stress of the shaft (26) among the natural frequency of the shaft (26) and the maximum inner stresses that the shaft (26) is intended to undergo
- a fourth step of calculating the number of helical windings (30, 32) and the value of the angle A1 depending on the values defined in the preceding steps 1 to 3.
